# EUROPEAN PATENT APPLICATION

(11) **EP 1 890 365 A2**
(43) Date of publication of application: **20.02.2008**
(21) Application number: 07022114.8
(22) Date of filing: 14.08.2006
(51) Int. Cl.: H01R 13/645

(54) **HDMI cable interface**

(30) Priority: 12.08.2005 US 202950
(62) Divisional of application: 06016961.2
(71) Applicant: MONSTER CABLE PRODUCTS, INC., Brisbane CA 94005 (US)
(72) Inventor: Galang, Einstein C., Daly City, CA 94014 (US); Martin, Demian, San Leandro, CA 94577 (US)
(74) Representative: HOFFMANN EITLE

(57) **Abstract**

A method and apparatus for transmitting an HDMI signal to a remote location. The method splits the signal into a multitude of signals that are transmitted down cables. The split signals are collected into a single signal at the receiving end at the remote location. An apparatus for splitting the signals and collecting the split signals is illustrated.

## Description

This application is a continuation in part application of and claims priority to Application Number 10/254,485 entitled "DVI CABLE INTERFACE" filed 9/24/2002.

### TECHNICAL FIELD

This invention relates to interfaces for electrical devices. In particular, the invention relates to cable with an HDMI variant of the Digital Visual Interface (DVI) for use with digital display devices called High-Definition Multimedia Interface or HDMI. With still greater particularity, the invention relates to interconnect boards for connecting an HDMI interface to multiple cables.

### BACKGROUND ART

The High-Definition Multimedia Interface (HDMI) is a display interface developed in response to the proliferation of digital flat-panel displays. The HDMI interface is becoming more prevalent and is expected to become widely used for digital display devices, including flat-panel displays and emerging digital CRTs. The digital HDMI connector has nineteen pins that can accommodate TMDS and optional CEC channel links as well as the VESA Enhanced DDC and EDID services. The HDMI specification defines two types of connectors. The standard HDMI cable attachable to the connector is a nineteen conductor cable. HDMI cables are expensive and cannot be used for great lengths. The longest commercially available HDMI cable is forty-eight feet in length (48'). The only available alternative to use of HDMI cables is double digital analog conversion. The digital signal from the computer must be converted to an analog signal for the analog VGA interface, then converted back to a digital signal for processing by the flat-panel display. This inherently inefficient process takes a toll on performance and video quality and adds cost. In contrast, when a display is directly connected to a digital interface, digital-to-analog conversion is not required.

A suitable HDMI cable arrangement is an essential element of a new generation of electronic devices including digital television, High Definition Television (HDTV) and large data monitors. Such devices will need long cables as the display is often removed from the electronics.

### DISCLOSURE OF THE INVENTION

A problem has arisen in HDMI technology where a digital signal is required to traverse a long distance. The bandwidth required to display SXGA is 83 MHZ. If a greater resolution, such as for HDTV, is desired, the bandwidth requirement will be correspondingly larger. If standard nineteen conductor cable is used, the crosstalk and radiation along with capacitive degradation of signal making the use of long length HDMI cables untenable. If conventional coaxial cable is used, to reduce these problems, a bundle of nineteen cables is required. Accordingly, there is a longstanding demand for HDMI cable system capable of long length and reasonable cost.

The invention makes extensive use of existing time proven cabling methods. A standard HDMI interface connector of one gender is connected to a custom connector card. The card connects the nineteen output connections of the interface to a plurality of twisted pair cables. A similar card connects the twisted pair cables to an HDMI connector of the opposite gender.

The inventions system allows connection of devices such as displays to a remote source such as a television receiver or computer. This is accomplished with time-tested components at minimal cost. The invention may be used to string the twisted pair cables through walls with a converter at each end attachable by HDMI pigtail to the components.

### BRIEF DESCRIPTION OF DRAWINGS

Figure 1 is a block diagram of the system of the invention.

Figure 2 is a top plan view of converter 103 of the invention.

### BEST MODE FOR CARRYING OUT THE INVENTION

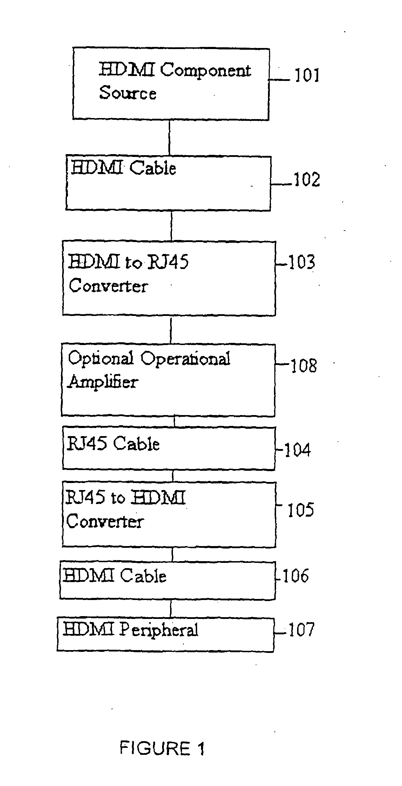

Figure 1 is a block diagram of the system of the invention. The component source is the source of the HDMI signal. Component source 101 maybe a computer, specifically, the video output of a computer. Component source 101 may also be a DVD player, a television set, or VCR, in short, any thing that is capable of producing a signal under the HDMI standard. Component source 101 typically delivers the signal through a standard DVD jack, although a direct connection to a HDMI cable is also possible. One end of a HDMI cable 102 connects to the output of component source 101. Cable 102 is typically a nineteen (19) wire cable adapted specifically for transmission of HDMI signals. The other end of cable 102 connects to a converter 103. The connection of cable 102 to converter 103 may be done through an HDMI plug and HDMI jack or may be direct. Converter 103 converts the nineteen input signal into a plurality of signals suitable for twisted pair cables. In the preferred embodiment, converter 103 does not include any active components. In the preferred embodiment, converter 103 outputs to three RJ45 jacks. A plurality of twisted pair cables 104 have one end connected to converter 103. In the preferred embodiment, three category 5 cables each having four twisted pairs was used for cables 104. For a greater bandwidth, category 5E, category 6 or an optimized cable should be used. The other end of cables 104 connect to the input of a second converter 105. In the preferred embodiment, converter 105 is identical to converter 103 reversed. The output of converter 105 connects to an HDMI cable 106. HDMI cable 106 connects to a peripheral 107. Peripheral 107 may be a video monitor or any device having an HDMI input. In an optional embodiment, an operational amplifier 108 such as a 941 OP Amp is placed between converter 103 and cables 104 to boost signal strength.

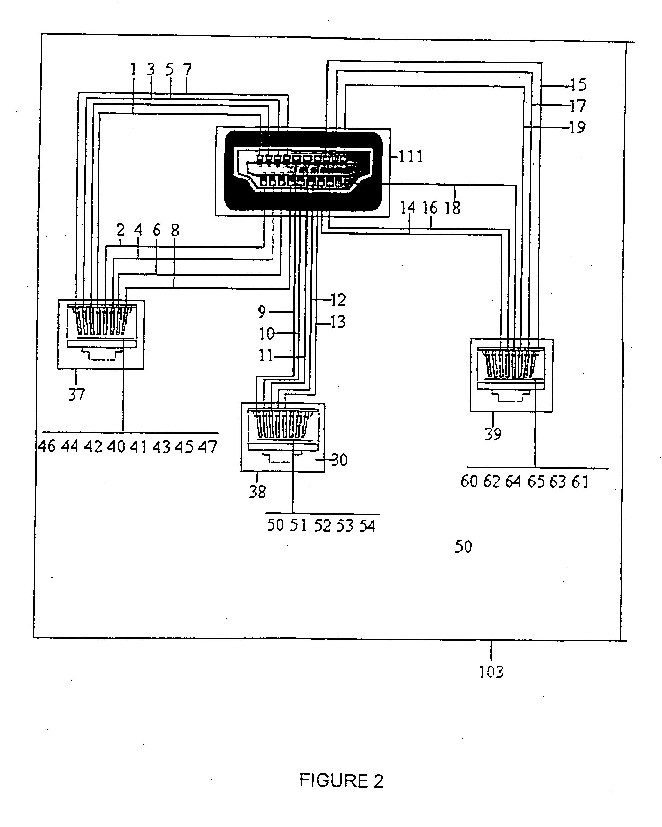

Figure 2 is a top plan view of converter 103 of the invention. A printed circuit board 50 forms the body of converter 103. Converter 103 includes an HDMI jack 11 mounted to printed circuit board 50 for inputting an HDMI signal. A HDMI-D Female Receptacle such as those made by Molex has been found suitable for jack 111 but other equivalent jacks could be used in either a male or female embodiment. Jack 111 includes nineteen pin recepticles 1-19. Three output jacks 37, 38, and 39 are also mounted to printed circuit board 50 included on converter 3. Molex CAT5 Jack w/internal shield #855070001 have been found suitable for use as output jacks 37, 38, and 39. Each of output jacks 37, 38, and 39 include 8 pins 40-47, 5 pins 50-54 and 6 pins 60-65, respectively. It is worth noting that the correspondence between particular pins and individual wires is a matter of design preference only and is not by way of limitation or to the exclusion of other wiring alternatives as a 8 wire, 8 wire, 3 wire alternative is equally operable variant. Board 50 connects pin 1 of input HDMI jack 111 to pin 40 of output jack 37. The remaining pins are connected as shown in the following table.

**Table 1**

| |
|---|
| Jack 37 pin 40 to HDMI jack 11 pin 1 TMDS Data2+ |
| Jack 37 pin 41 to HDMI jack 11 pin 2 TMDS Data2 Shield |
| Jack 37 pin 42 to HDMI jack 11 pin 3 TMDS Data2- |
| Jack 37 pin 43 to HDMI jack 11 pin 4 TMDS Datal1 |
| Jack 37 pin 44 to HDMI jack 11 pin 5 TMDS Data1 Shield |
| Jack 37 pin 45 to HDMI jack 11 pin 6 TMDS Data1- |
| Jack 37 pin 46 to HDMI jack 11 pin 7 TMDS Data0+ |
| Jack 37 pin 47 to HDMI jack 11 pin 8 TMDS Data0 Shield |
| Jack 38 pin 50 to HDMI jack 11 pin 9 TMDS Data0- |
| Jack 38 pin 51 to HDMI jack 11 pin 10 TMDS Clock+ |
| Jack 38 pin 52 to HDMI jack 11 pin 11 TMDS Clock Shield--> |
| Jack 38 pin 53 to HDMI jack 11 pin 12 TMDS Clock- |
| Jack 38 pin 54 to HDMI jack 11 pin 13 CEC (not used) |
| Jack 39 pin 60 to HDMI jack 11 pin 14 Reserved (N.C. on device) |
| Jack 39 pin 61 to HDMI jack 11 pin 15 SCL |
| Jack 39 pin 62 to HDMI jack 11 pin 16 SDA |
| Jack 39 pin 63 to HDMI jack 11 pin 17 DDC/CEC Ground |
| Jack 39 pin 64 to HDMI jack 11 pin 18 +5V Power |
| Jack 39 pin 65 to HDMI jack 11 pin 19 Hot Plug Detect |

A modified converter 103 maybe mounted in a wall socket (not shown) with HDMI jack 111 reversed pointing into the room and jacks 37, 38, and 39 directed toward the wall. Long cables (not shown) running through walls can connect two such converters to allow an unobtrusive remote monitor in a building. HDMI cables (not shown) are pigtails connecting to source (not shown) and output (not shown) respectively.

The present invention has been particularly shown and described with respect to certain preferred embodiments and features thereof. However, it should be readily apparent to those of ordinary skill in the art that various changes and modifications in form and detail may be made without departing from the spirit and scope of the inventions as set forth in the appended claims, in which reference to an element in the singular is not intended to mean "one and only one" unless explicitly so stated, but rather "one or more". The inventions illustratively disclosed herein may be practiced without any element which is not specifically disclosed herein.

A first statement of the specification is of a system for linking an HDMI producing device producing an HDMI output to a peripheral device comprising: a connection means for connecting to the output of said HDMI producing device to a HDMI cable, a converter for converting an HDMI input to a plurality of outputs, a plurality of cables each having one end connected to each of said outputs of said converter, a second converter for converting the signal received from the other end of each of said cables into an HDMI output, and a second HDMI cable for connecting the output of said second converter to a peripheral device.

A second statement of the specification is of a system for linking an HDMI producing device producing an HDMI output to a peripheral device according to the first statement, further comprising a second connection means for connecting said cable to said peripheral device.

A third statement of the specification is of a system for linking an HDMI producing device producing an HDMI output to a peripheral device according to the first statement, further comprising an operational amplifier connecting said converter to said cables.

A fourth statement of the specification is of a system for linking an HDMI producing device producing an HDMI output to a peripheral device according to the first statement, wherein said plurality of cables are each comprised of a plurality of twisted pairs.

A fifth statement of the specification is of a system for linking an HDMI producing device producing an HDMI output to a peripheral device according to the fourth statement, wherein there are four pairs in each of said plurality of cables.

A sixth statement of the specification is of a system for linking an HDMI producing device producing an HDMI output to a peripheral device according to the fourth statement, wherein there are three of such twisted pair cables.

A seventh statement of the specification is of a system for linking an HDMI producing device producing an HDMI output to a peripheral device according to the fourth statement, wherein there are three of such twisted pair cables and they are category 5 cables.

An eighth statement of the specification is of a converter card for converting a 19-pin HDMI signal into a plurality of signals suitable for conduction on a plurality of multi conductor cables comprising: a 19-pin HDMI input connectable to a source of HDMI signal, a plurality of outputs for connecting to multi conductor cables, and a plurality of connections connecting each one of said 19 pins to a single conductor in one of said multi conductor cables.

A ninth statement of the specification is of a converter card for converting a 19-pin HDMI signal into a plurality of signals suitable for conduction on a plurality of multi conductor cables according to the eighth statement, wherein there are three such outputs.

A tenth statement of the specification is of a converter card for converting a 19-pin HDMI signal into a plurality of signals suitable for conduction on a plurality of multi conductor cables according to the ninth statement, wherein said outputs are category 5.

An eleventh statement of the specification is of a converter card for converting a 19-pin HDMI signal into a plurality of signals suitable for conduction on a plurality of multi conductor cables according to the ninth statement, wherein said cables are category 5e.

A twelfth statement of the specification is of a converter card for converting a 19-pin HDMI signal into a plurality of signals suitable for conduction on a plurality of multi conductor cables according to the ninth statement, wherein said cables are category 6.

A thirteenth statement of the specification is of a method for conducting a 19-conductor HDMI signal to a distant location comprising the steps of, splitting the signal into a plurality of signals, and connecting each of said split signals into a plurality of conductors, and collecting each of said split signals into a single 19-conductor HDMI signal, receiving said collected signal at said distant location.

A fourteenth statement of the specification is of a method for conducting a 19-conductor HDMI signal to a distant location according to the thirteenth statement where said 19 conductor signal is split into three conductor signals each conveyed by an individual cable.

A fifteenth statement of the specification is of a method for conducting a 19-conductor HDMI signal to a distant location according to the thirteenth statement wherein said 19 conductor HDMI signal is connected to a plurality of twisted pairs in said multiconductor cables.

## Claims

1. A converter card for converting a 19-pn HDMI signal into a plurality of signals suitable for conduction on a plurality of multi conductor cables comprising:
a 19-pin HDMI input connectable to a source of HDMI signal,
a plurality of outputs for connecting to multi conductor cables, and
a plurality of connections connecting each one of said 19 pins to a single conductor in one of said multi conductor cables.

2. A converter card for converting a 19-pin HDMI signal into a plurality of signals suitable for conduction on a plurality of multi conductor cables as in claim 1, wherein there are three such outputs.

3. A converter card for converting a 19-pin HDMI signal into a plurality of signals suitable for conduction on a plurality of multi conductor cables as in claim 2, wherein said outputs are category 5.

4. A converter card for converting a 19-pin HDMI signal into a plurality of signals suitable for conduction on a plurality of multi conductor cables as in claim 2, wherein said cables are category 5e.

5. A converter card for converting a 19-pin HDMI signal into a plurality of signals suitable for conduction on a plurality of multi conductor cables as in claim 2, wherein said cables are category 6.
